(19) Europäisches Patentamt / European Patent Office / Office européen des brevets

(11) **EP 4 737 961 A1**

(12) **EUROPEAN PATENT APPLICATION**
published in accordance with Art. 153(4) EPC

(43) Date of publication:
**06.05.2026 Bulletin 2026/19**

(21) Application number: **24849178.9**

(22) Date of filing: **30.07.2024**

(51) International Patent Classification (IPC):
**G02B 6/122** *(2006.01)*   **G02B 6/125** *(2006.01)*

(52) Cooperative Patent Classification (CPC):
**G02B 6/122; G02B 6/125**

(86) International application number:
**PCT/JP2024/027191**

(87) International publication number:
**WO 2025/028533 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.07.2023 JP 2023124292**

(71) Applicant: **NTT Innovative Devices Corporation Yokohama-shi, Kanagawa 221-0031 (JP)**

(72) Inventors:
• **GO Takashi**
  **Yokohama-shi, Kanagawa 221-0031 (JP)**
• **TAKESHITA Makoto**
  **Yokohama-shi, Kanagawa 221-0031 (JP)**
• **YANAGISAWA Masahiro**
  **Yokohama-shi, Kanagawa 221-0031 (JP)**
• **OGAWA Daisuke**
  **Yokohama-shi, Kanagawa 221-0031 (JP)**

(74) Representative: **TBK**
  **Bavariaring 4-6**
  **80336 München (DE)**

(54) **PLANAR LIGHTWAVE CIRCUIT**

(57)    A planar lightwave circuit according to the present disclosure includes: a substrate (1), a cladding layer (2) provided on the substrate (1); a core (3) embedded in the cladding layer (2) to form a waveguide; and a depressed region (210) in which a plurality of depressed portions (5) formed in the cladding layer (2) are arranged two-dimensionally in an in-plane direction of the cladding layer (2).

210

**FIG.6**

EP 4 737 961 A1

**Description**

Technical Field

The present disclosure relates to a planar lightwave circuit.

Background Art

Planar lightwave circuits (PLCs) fabricated on substrates using optical waveguides enable integration of diverse interferometers such as optical filters, optical multiplexers/demultiplexers, or optical switches onto a single chip and are realized using various material systems. For example, planar lightwave circuits composed of silica-based optical waveguides are widely used in practical applications primarily in the field of optical communications because of their low optical loss, stability, and/or reliability.

Citation List

Patent Literature

Patent Literature 1 Japanese Patent Laid-Open No. 2010-32921
Patent Literature 2 Japanese Patent Laid-Open No. H9-5548

Summary of Invention

In known planar photonic circuits, there is room for improvement in suppressing or reducing crosstalk caused by stray light propagating through a cladding layer.
An object of the present disclosure is to provide a planar lightwave circuit capable of improving an effect of suppressing or reducing crosstalk caused by light (for example, stray light) propagating in a cladding layer.
A planar lightwave circuit according to an aspect of the present disclosure includes: a substrate, a cladding layer provided on the substrate; a core embedded in the cladding layer to form a waveguide; and a depressed region in which a plurality of depressed portions formed in the cladding layer are arranged two-dimensionally in an in-plane direction of the cladding layer.
The planar lightwave circuit of one aspect of the present disclosure, it is possible to improve an effect of suppressing or reducing crosstalk caused by light (for example, stray light) propagating through the cladding layer.

Brief Description of Drawings

[Figure 1] Figure 1 is a top view schematically illustrating an optical circuit configured with a planar lightwave circuit technique for fabricating a silica-based optical waveguide on a silicon substrate.
[Figure 2] Figure 2 is a partial sectional view partially illustrating a cross section along a cutting line X-X' depicted in Figure 1.
[Figure 3] Figure 3 is a top view schematically illustrating an optical circuit that is a non-limiting example of a planar lightwave circuit with a light-shield groove group according to an embodiment.
[Figure 4] Figure 4 is a partial enlarged view for describing details of each light-shield groove groups depicted in Figure 3.
[Figure 5] Figure 5 is a partial sectional view partially illustrating a cross section along a cutting line X-X' depicted in Figure 4.
[Figure 6] Figure 6 is a partial sectional view partially illustrating a cross section along a cutting line Z-Z' depicted in Figure 4.
[Figure 7] Figures 7(a) to 7(h) are each a top view schematically illustrating an example of an arrangement of deep grooves in a light-shield groove group.
[Figure 8] Figure 8 is a diagram illustrating a detailed example of how stray light across a plurality of deep grooves in the light-shield groove group according to the embodiment.
[Figure 9] Figure 9 is a graph illustrating an example of a positional change in a y-axis direction of stray light when the stray light propagating in a z-axis direction travels through the light-shield groove group according to the embodiment.

[Figure 10] Figure 10 is a sectional view schematically illustrating an example of a light-reception element mounted on an end face of an optical circuit according to the embodiment.

[Figure 11] Figure 11 is a diagram illustrating an example of an arrangement pattern corresponding to a configuration in which a diameter of deep grooves is changed in a part of or all of multiple segmented regions in the example of the deep groove arrangement pattern depicted in Figure 7(d).

[Figure 12] Figure 12 is a sectional view schematically illustrating an example of a finished shape of grooves near a processing limit of the embodiment.

[Figure 13] Figure 13 is a top view schematically illustrating an example of a test circuit fabricated in order to confirm an effect of a light-shield groove group according to an example.

[Figure 14] Figure 14 is a graph illustrating an example of a result of evaluating a transmittance spectrum of the test circuit with respect to a wavelength according to the example.

Description of Embodiment

Hereinafter, an embodiment and an example of the present disclosure will be described in detail with reference to the drawings. The same or similar reference signs indicate the same or similar elements, and repeated descriptions thereof may be omitted. In the following descriptions, when materials and numerical values are described, they are examples, and the present disclosure may be implemented by additionally or alternatively using other materials and numerical values.

[Overview]

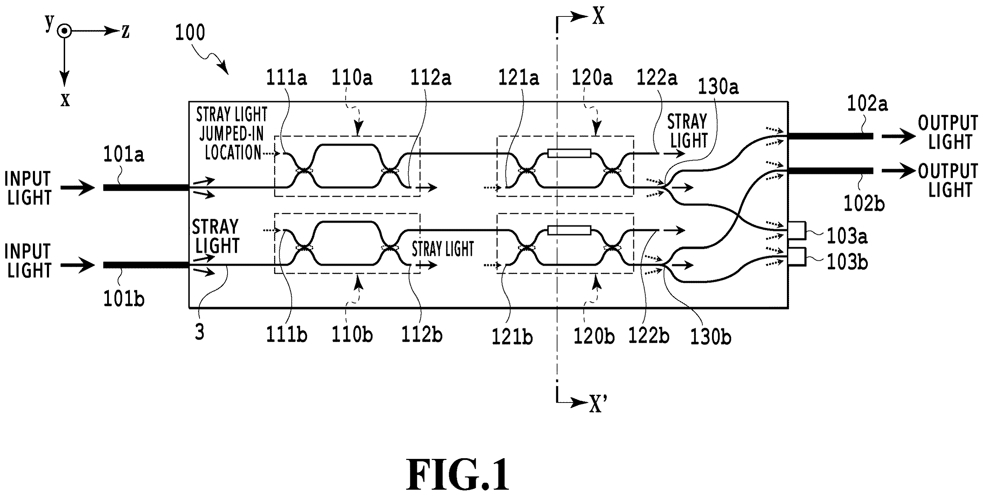

Figure 1 is a top view schematically illustrating an optical circuit 100 configured with a planar lightwave circuit technique of fabricating a silica-based optical waveguide on a silicon substrate.

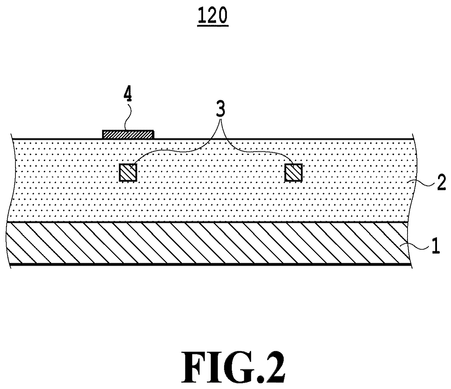

As will be described later based on Figure 2, the optical circuit 100 includes: a substrate 1; a cladding layer 2 stacked on top of the substrate 1; and a core 3 that is embedded inside the cladding layer 2 and functions as a waveguide. Note that, the core 3 may be referred to as a waveguide core 3 or a waveguide 3. Further, the cladding layer 2 may be abbreviated as a cladding 2.

In the optical circuit 100, for example, optical interferometer circuits 110a and 110b that function as optical filters, optical interferometer circuits 120a and 120b that function as optical switches or attenuators, and optical branch circuits 130a and 130b are integrated in a configuration where the circuits are serially connected by the waveguide 3. Further, input optical fibers 101a and 101b, output optical fibers 102a and 102b, and light-reception elements 103a and 103b are illustratively mounted to a chip end face of the optical circuit 100.

While two sets each of circuits, elements, or the like are integrated or mounted in the optical circuit 100 as described above, and these components are distinguished by adding an "a" or "b" to the end of their reference symbols; however, when there is no need to distinguish between them, the final symbol will be omitted.

The optical interferometer circuit 110 and the optical interferometer circuit 120 are both Mach-Zehnder interferometers configured by connecting two optical couplers in series with two waveguides 3. In the optical interferometer circuit 110, for example, the waveguide lengths (in other words, the optical path length difference) of the two cascaded waveguides 3 differ from each other by ΔL. Due to known interference phenomena, light of a specific wavelength with a repetition period determined by the optical path length difference ΔL passes through the optical interferometer circuit 110, while light of other wavelengths is blocked.

In the optical interferometer circuit 120, for example, a thermo-optical phase shifter is provided in any one of the two waveguides 3 connected in series. Figure 2 is a partial sectional view partially illustrating a cross section along a cutting line X-X' depicted in Figure 1 and, for example, illustrates a cross section of a portion focusing on one optical interferometer circuit 120a. Note that a cross section of a portion focusing on the other optical interferometer circuit 120b may also be understood to be equivalent to the cross section of the portion focusing on the optical interferometer circuit 120a.

As illustrated in Figure 2, in the optical interferometer circuit 120, a thin-film heater 4 is provided on an upper portion of the cladding 2 stacked on the substrate 1. By supplying power to the thin-film heater 4, the temperature of the waveguide core 3 positioned below the thin-film heater 4 changes locally, and an equivalent refractive index of the waveguide core 3 changes due to the thermo-optical effect in response to the localized change in the temperature.

In response to the changes in the equivalent refractive index, a phase of light propagating through the waveguide core 3 shifts and interference conditions of the optical interferometer circuit 120 changes, thereby changing the transmittance of the optical interferometer circuit 120. The optical branch circuit 130 branches light into two by a circuit having a structure in which a single waveguide is bifurcated, called a Y-branch waveguide.

The light input into the optical circuit 100 from the input optical fiber 101 is filtered in the optical interferometer circuit 110 so as to block light components with wavelengths other than a specific wavelength, and the light with the specific wavelength is guided to the downstream optical interferometer circuit 120. The light having passed through the optical interferometer circuit 110 is attenuated in the optical interferometer circuit 120 and then branched into two beams by the optical branch circuit 130. One of branched beams is output to the output optical fiber 102 while the other one is guided to the light-reception element 103.

Here, in the optical circuit 100, undesirable light called "stray light" may occur, which propagates within the cladding without propagating through the waveguide 3. For example, in the optical circuit 100, leakage light occurs at a connection point between the input optical fiber 101 and the optical circuit 100 due to a mismatch in propagation modes or a misalignment of mounting axes, and the leakage light becomes stray light.

Further, in the optical interferometer circuit 110, light with a wavelength different from the specific wavelength described above is output from an unconnected port 112 and becomes stray light. In a similar manner, in the optical interferometer circuit 120, attenuated light is output from an unconnected port 122 and becomes stray light. Furthermore, in the optical branch circuit 130, leakage light occurs from a portion corresponding to the "fork" of the Y-branch waveguide due to, for example, a deviation in shape caused by imperfection in manufacturing, and the leakage light becomes stray light.

When stray light such as that described above is incident onto the waveguide 3 and the like from a part of or all of the plurality of locations listed as examples below, the stray light causes crosstalk with respect to light propagating through the waveguide 3, resulting in degradation of the characteristics (or performance) of the optical circuit 100. Note that for the sake of convenience, stray light "incident on" the waveguide 3 and the like may be hereinafter expressed as stray light "jumping into" the waveguide 3 and the like.

(Locations where stray light may jump into)

- Unconnected port 111 of optical interferometer circuit 110
- Unconnected port 121 of optical interferometer circuit 120
- Portion where waveguide 3 gradually widens for Y-branch of optical branch circuit 130
- Connected portion between optical circuit 100 and output optical fiber 102

· Light-reception surface of light-reception element 103

Locations where loss may occur in the optical circuit 100 may be both locations where stray light is generated and locations where stray light may jump into. Several methods for reducing or eliminating these stray lights are being considered. For example, Patent Literature 1 describes a method of using a total reflection groove.

This method involves providing a total reflection groove in the cladding that diagonally travels the cladding relative to a direction in which stray light travels, and totally reflecting the stray light at the boundary between the air and the cladding to prevent the stray light from traveling into a location where it jumps in. As the total reflection groove, for example, a triangular shape with one side having a boundary surface is used, where an angle formed by a travel direction of the stray light and a normal direction of the boundary surface is equal to or greater than 43°, which is a critical angle.

On the other hand, Patent Literature 2 describes a method of using a light-shield material. This method involves forming a groove in the cladding and filling the groove with a light-absorbing material as a light-shield material to shield stray light. The light-absorbing material is a material obtained by mixing light-absorbing microparticles into a resin base material, and the groove is filled with the light-absorbing material by applying this material.

However, with the method of using a total reflection groove described in Patent Literature 1, since the method merely changes a travel direction of stray light in a circuit plane, a situation where stray light propagates in the cladding such as a state of refraction in a direction perpendicular to the circuit plane does not change. When a circuit scale is small, it is possible to arrange the total reflection groove so that a propagation path that connects a location where stray light is generated and a jumped-in location of the stray light is not created in the cladding. On the other hand, when the circuit scale is increased, since the number of locations where stray light is generated and the number of jumped-in locations increase, it may become difficult to arrange total reflection grooves while considering all possible combinations between the locations where stray light is generated and the jumped-in locations.

For example, in Figure 1, it is possible to prevent stray light emitted from the unconnected port 112a from jumping into the unconnected port 121a by arranging a total reflection groove between the unconnected port 112a and the unconnected port 121a. On the other hand, there is a possibility that light emitted from the unconnected port 112a may jump into other locations such as the unconnected port 121b positioned adjacent to the unconnected port 121a or an optical branch circuit 130b at the downstream. In a similar manner, for example, when a total reflection groove is arranged between the unconnected port 122 and the output optical fiber 102 to prevent stray light from jumping from the unconnected port 122 into the output optical fiber 102, there is a possibility that the stray light may jump into the light-reception element 103 or the like arranged at the downstream of the unconnected port 122.

Further, since the light-reception element 103 mounted on an end face of the optical circuit 100 has a light-reception surface wider than a core size of the waveguide 3 and may receive light incident from any angle relative to the end face of the optical circuit 100, it is prone to crosstalk.

Therefore, the method described in Patent Literature 1 may be considered impractical for circuits with a large circuit scale and high integration density because it is difficult to arrange total reflection grooves while taking all jump paths into consideration. In addition, since the total reflection groove requires a boundary surface to be set at a specific size so as to satisfy the critical angle so that all stray light having spread and propagated within the cladding is reflected, this size requirement may hinder improvements in the integration density of optical circuits.

On the other hand, since the method of using the light-shield material described in Patent Literature 2 involves an additional step of filling a light-absorbing material and increases the number of manufacturing steps, costs may potentially rise. Further, since positional accuracy of application by filling with the light-absorbing material is not considered sufficient, a sufficient gap is required between an application region of the light-absorbing material and other regions such as a chip end or a heat insulation groove in the optical circuit. Furthermore, gas such as siloxane may be generated from the resin used in the light-absorbing material over a long period of time, which may be a factor in reducing the reliability of the optical circuit.

In consideration thereof, a non-limiting embodiment and a non-limiting example of a planar lightwave circuit capable of improving an effect of suppressing or reducing crosstalk caused by light (for example, stray light) propagating in a cladding layer while avoiding an increase in costs or a reduction in reliability will be described below. The "stray light" may be understood as a non-limiting example of "undesired light that is not desired to propagate" or "light that is desired to be attenuated" in the cladding layer.

While the embodiment and the example described below illustrate examples of a planar lightwave circuit using the silica-based waveguide 3, a material of the waveguide 3 in the present disclosure is not limited to silica-based materials. For example, in addition to the silica-based waveguide 3, waveguides of other materials such as a polymer-based waveguide, a silicon (Si) waveguide, and an indium phosphide (InP)-based waveguide may be applied to the planar lightwave circuit according to the present disclosure.

[Embodiment]

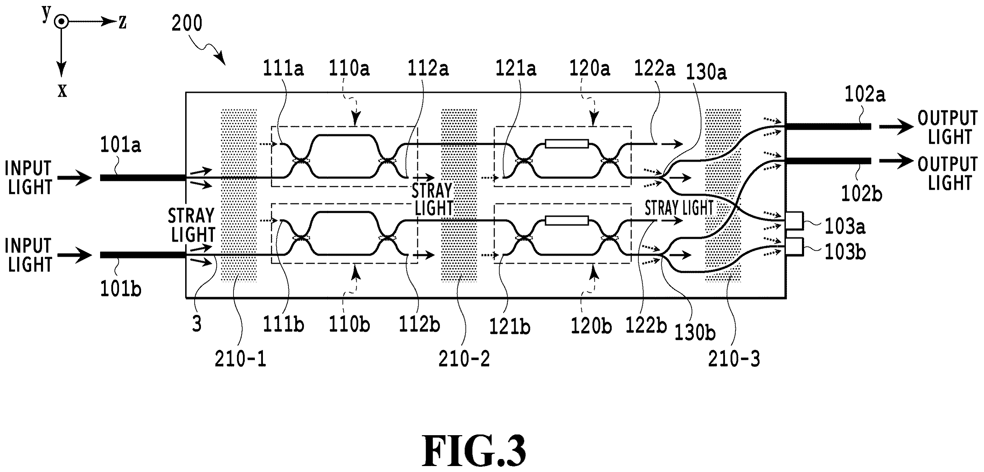

Figure 3 is a top view schematically illustrating an optical circuit 200 that is a non-limiting example of a planar lightwave circuit with a light-shield groove group according to an embodiment. The optical circuit 200 illustrated in Figure 3 corresponds to a configuration provided with adding light-shield groove groups 210-1, 210-2, and 210-3 to the configuration illustrated in Figure 1. The other components in the optical circuit 200 may be understood to be equivalent or similar to the components illustrated in Figure 1.

Illustratively, the light-shield groove group 210-1 is provided between a connection portion of the input optical fiber 101 and the optical interferometer circuit 110, and the light-shield groove group 210-2 is provided between the optical interferometer circuit 110 and the optical interferometer circuit 120. The light-shield groove group 210-3 is provided between the optical interferometer circuit 120 and a connection portion between the optical branch circuit 130 and the output optical fiber 102. In other words, the optical circuit 200 includes the light-shield groove groups 210-1, 210-2, and 210-3, which are individually provided in correspondence with locations between where the stray light is generated and the jumped-in location of the stray light-shield.

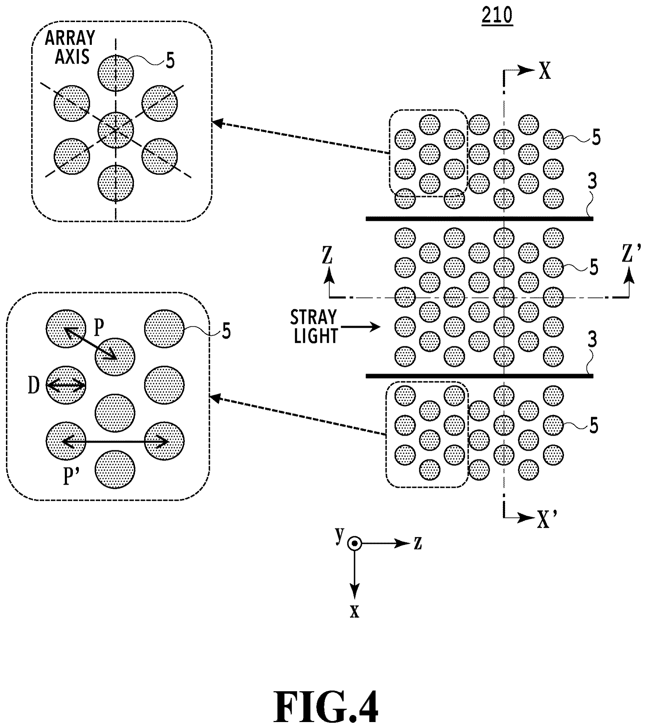

Figure 4 is a partial enlarged view for describing details of each light-shield groove group 210-k (where k is an integer greater than or equal to 1) illustrated in Figure 3. While the waveguide 3 crossing the light-shield groove group 210-3 is depicted as a curved waveguide 3 that includes a curved portion in Figure 3, but for convenience of description, Figure 4 illustrates an example in which the waveguide 3 crossing each light-shield groove group 210-k is a straight waveguide 3. Hereinafter, when it is not necessary to distinguish light-shield groove groups 210-k individually, they may be abbreviated as a "light-shield groove group 210."

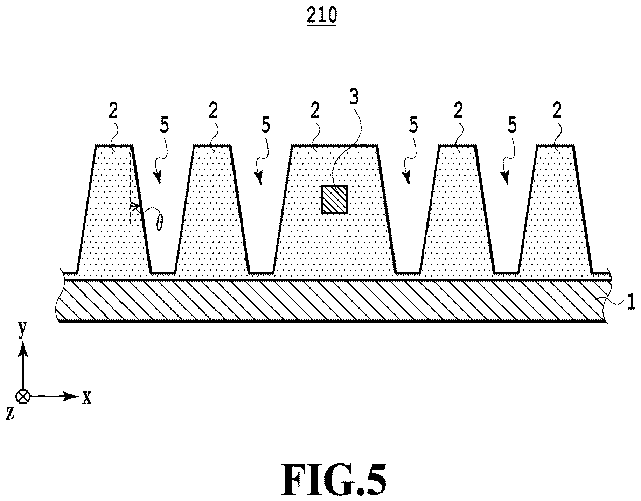

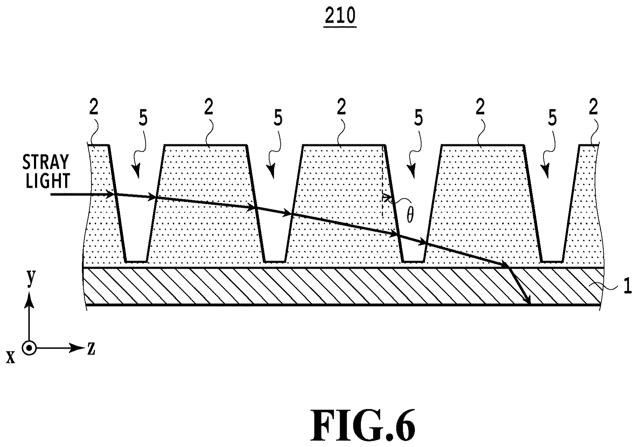

Figures 5 and 6 are partial sectional views partially illustrating cross sections along a cutting line X-X' and a cutting line Z-Z' depicted in Figure 4, respectively. In each of Figures 3 to 6, a z-axis corresponds to an input/output directions of the waveguide 3, an x-axis corresponds to an in-plane width direction of the substrate 1, and a y-axis corresponds to a direction perpendicular to the substrate 1 (in other words, a thickness direction of the substrate 1). The directions indicated by the x-axis, the y-axis, and the z-axis similarly apply to the drawings used in the following description.

As illustrated in Figures 4 to 6, each light-shield groove group 210 has, for example, a configuration in which a plurality of deep grooves 5 formed by partially removing the cladding 2 around the waveguide core 3 at a plurality of locations are arranged two-dimensionally. In addition, as depicted in Figures 5 and 6, an angle formed by a normal direction of a substrate surface and a normal direction of a side wall surface of the deep groove 5 is an angle other than 90°. The normal direction of the substrate surface is, for example, a direction from a rear surface to a front surface of the substrate 1. The normal direction of the side wall surface of the deep groove 5 is, for example, a direction from inside toward outside of the cladding 2.

For example, as depicted in Figure 5, when the angle formed by the normal direction of the substrate surface and the side wall surface of the deep groove 5 is denoted as θ, the angle formed by the two normal directions described above is represented as "90° - θ" and, therefore, the "angle other than 90°" means θ ≠ 0°.

In the present disclosure, "deep groove" may be interchangeably read as other terms such as "groove," "groove portion," "hole," "hole portion," "depression," "depressed portion," "concave portion," or "cladding removed portion." Terms such as "depression," "depressed portion," "concave portion," or "cladding removed portion" may be understood as being terms of a superordinate concept including "groove," "groove portion," "hole," and "hole portion." In addition, in the light-shield groove group 210, a portion of the cladding 2 that remains without being removed may be referred to as "residual cladding," "protrusion cladding," "convex cladding," or "mesh-like cladding" for the sake of convenience.

A "light-shield groove group" configured with a plurality of "deep grooves" may be referred to as a "groove group" or, alternatively, focusing on a functional structure to be described later, "light-shield groove group" may be interchangeably referred to as other terms such as "stray light suppression structure," "stray light reduction structure," or "light refraction control structure." "Structure" may be interchangeably referred to as other terms such as "configuration," "means," and "portion". "Portion" may be read as "region".

Figures 5 and 6 illustrate an example of forming the deep groove 5 with a shape of which the size (for example, a diameter) in a top view of the deep groove 5 becomes smaller as it approaches the substrate 1. In this example, the angle formed by the two normals described above is an angle smaller than 90° (in other words, θ > 0°). The deep groove 5 may be formed, for example, by digging the cladding 2 from a top surface of the cladding 2 to a depth reaching a top surface of the substrate 1. Alternatively, the deep groove 5 may be formed at a shallower depth that reaches at least a height of the waveguide core 3 where at least stray light is generated, for example. A position corresponding to the height of the waveguide core 3 is, for example, a position corresponding to a distance in the y-axis direction relative to the substrate 1 in Figure 5 and, illustratively, may be a y-position corresponding to a bottom surface of the waveguide core 3.

As will be described later, since the deep grooves 5 are desirably arranged as densely as possible, Figure 4 illustrates an example where the deep grooves 5 are arranged using hexagonal packing (which may be read as a "hexagonal lattice"). In addition, a main travel direction of stray light in the optical circuit 200 is the z-axis direction in Figures 4 to 6. For example, as depicted by a dotted line in Figure 4, an array axis of the hexagonal packing is arranged in a direction different from the z-axis direction that is a main travel direction of stray light.

With such an arrangement of the array axis, for example, stray light propagating in the z-axis direction propagates by frequently crossing the plurality of deep grooves 5 in each of the plurality of light-shield groove groups 210. As will be described later, as the number of deep grooves 5 crossed by the stray light propagating in the z-axis direction increases, the stray light becomes easier to scatter in the in-plane direction of the substrate 1, and also the number of times the stray light is refracted in the direction approaching the substrate 1 increases, thereby making it easier to expel the stray light from the cladding 2 to outside.

Although a pattern shape of the deep grooves 5 is not particularly limited, but for example, by forming the deep groove 5 in a circular shape, which is easy to process and form by densely arranging small patterns in a plan view, it becomes easy to arrange the deep grooves 5 as densely as possible. Alternatively, a shape other than a circular shape in a plan view such as a polygonal shape such as square shape and hexagonal shape, or a shape such as an ellipse may be applied to the pattern shape of the deep groove 5.

When the pattern shape of the deep grooves 5 is a circular shape, there is an additional effect of facilitating the attenuation of stray light through scattering in the in-plane direction (xz-plane direction) of the substrate 1. For example, as depicted in Figure 4, when a diameter of the deep grooves 5 is denoted as D and an arrangement pitch of the deep grooves 5 is denoted as P, a condition for stray light propagating in the z-axis direction to traversing the deep grooves 5 is represented by Formula 1 below.

$$D \geq 0.5 \cdot P \qquad (1)$$

Further, by defining D and P as a relationship represented by, for example, the following Formula 2, it is possible to leave the cladding 2 between the deep grooves 5 as much as possible in any direction in the substrate plane (xz-plane). Therefore, for example, it is possible to easily maintain a structural strength of the light-shield groove group 210 at a certain degree.

$$D < P \qquad (2)$$

From the above, the diameter D of the deep grooves 5 is desirably set to a value that satisfies Formulas 1 and 2 or, in other words, a value that satisfies the following Formula 2a.

$$0.5 \cdot P \leq D < P \qquad (2a)$$

Furthermore, when D and P satisfy a relationship represented by Formula 3 below, stray light in a direction along the array axis of the deep grooves 5 as well as in a direction intersecting the array axis of the deep grooves 5 will cross the deep grooves 5. Therefore, it is useful for D and P to satisfy the relationship in Formula 3 when stray light may be generated in any direction including the direction along the array axis of the deep grooves 5.

$$D \geq \frac{\sqrt{3}}{2} \cdot P \cong 0.86 \cdot P \qquad (3)$$

With providing the light-shield groove group 210 that satisfies Formulas 1 to 3 (in other words, Formulas 2a and 3), the stray light propagates across a large number of deep grooves 5, and is scattered in the in-plane direction of the substrate 1. Further, with setting $\theta$ to an angle other than 0°, the stray light is refracted multiple times also in a direction perpendicular to the substrate 1 and is expelled to outside the cladding 2. For example, at an angle of $\theta > 0$°, the stray light is refracted in a direction approaching the substrate 1 every time it crosses multiple deep grooves 5 as depicted in Figure 6.

When a refractive index of the substrate 1 is higher than a refractive index of the cladding 2, the stray light propagates in the substrate 1 while undergoing greater refraction. For example, in a wavelength band of 1.55 micrometers ($\mu$m), the refractive index of the silica-based waveguide 3 is approximately 1.4 and the refractive index of the silicon substrate is approximately 3.5, so this case applies.

When using a doped wafer known as a low-resistance wafer as the silicon substrate, since a large light absorption loss occurs even in the 1.55 $\mu$m wavelength band, it is possible to effectively attenuate stray light. In addition, when $\theta$ is an angle other than 0°, it has an effect of even reflected light of stray light to be deflected in a direction perpendicular to the substrate 1. In this way, since the plurality of deep grooves 5 enable not only refracted light but also reflected light from the stray light to be effectively scattered outside the cladding 2, it is possible to effectively attenuate stray light.

In manufacturing the optical circuit 200 according to the present embodiment, a process of forming the light-shield groove group 210 is added compared to the optical circuit 100. For example, a process of forming the deep grooves 5 by removing a part of the cladding 2 using a microfabrication technique such as photolithography is added.

Here, when integrating an optical interferometer provided with a thermo-optical phase shifter, although not illustrated in Figure 1, in many cases, a heat insulating groove is formed around the thermo-optical phase shifter in order to enhance efficiency of local heating by the thin-film heater 4. Since it is possible to share the process of forming the insulating groove with the process of forming the deep grooves 5 of the light-shield groove group 210, with simultaneously forming the deep grooves 5 of the light-shield groove group 210 upon forming the insulating groove, it is possible to avoid an increase in the number of processes.

[Examples of various arrangement patterns of deep grooves configuring light-shield groove group]

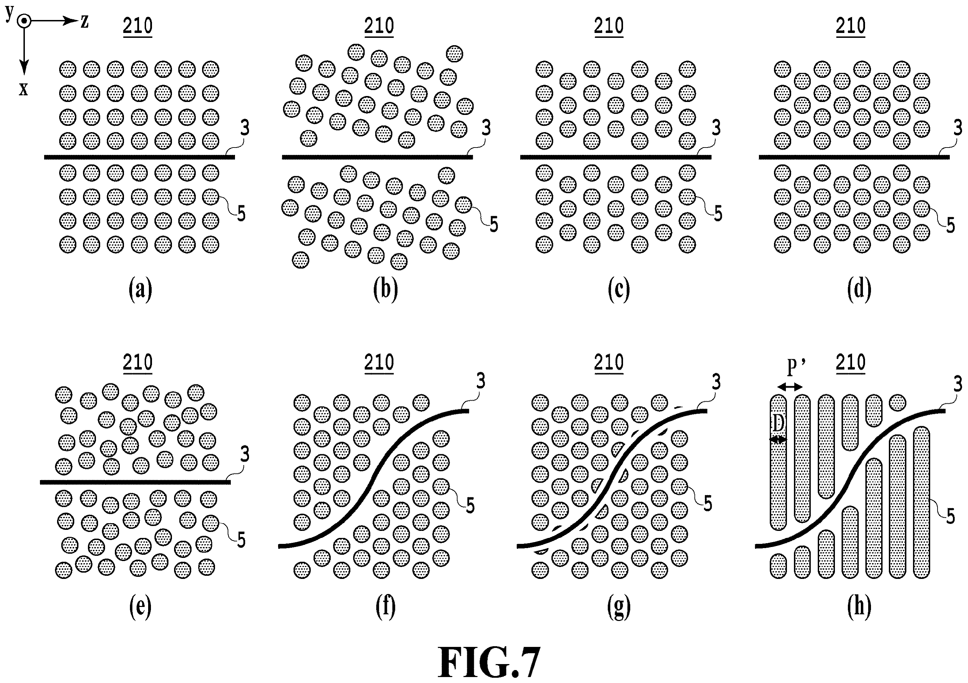

Various patterns are conceivable for the arrangement of the deep grooves 5 in the light-shield groove group 210. Figures 7 are each top view schematically illustrating example of deep groove arrangement pattern in the light-shield groove group 210, and eight arrangement patterns from (a) to (h) are depicted as non-limiting examples.

Figure 7(a) illustrates an example of a basic arrangement pattern in which the deep grooves 5 are lined up in both the x-axis direction and the z-axis direction in a grid pattern. When the travel direction of stray light deviates from the z-axis direction, such a grid arrangement pattern enables stray light to be eliminated or suppressed. When the travel direction of stray light is a direction along the z-direction, since there are line-of-sight gaps between the deep grooves 5 that allow the stray light to pass through, light-shield means that targets stray light traveling through the gaps between the deep grooves 5 may be applied individually. Note that a "line-of-sight gap that allows stray light to pass through" means, for example, that cladding 2 exists in the travel direction that allows stray light to propagate without crossing the deep grooves 5.

Figure 7(b) illustrates an example of arrangement pattern in which the deep grooves 5 lined up in a grid pattern is tilted diagonally. Figure 7(c) illustrates an example of arrangement pattern in which the deep grooves 5 are arranged with a half-pitch offset between odd-numbered rows and even-numbered rows. The arrangement pattern examples depicted in Figures 7(b) and 7(c) are both capable of eliminating (or reducing) gaps that allow stray light propagating along the z-axis direction to pass through by using a diameter D that is a value smaller than an arrangement pitch P of the deep grooves 5 but sufficiently large relative to the arrangement pitch P (in other words, not too small compared to the arrangement pitch P).

Figure 7(d) illustrates an example of arrangement pattern in which deep grooves 5 are arranged by hexagonal packing in a similar manner to the arrangement pattern illustrated in Figure 4. The arrangement pattern example depicted in Figure 7(d) is different from the arrangement pattern example depicted in Figure 7(c) in the arrangement pitch of the deep grooves 5 in the z-axis direction. For example, when the arrangement pitch in the x-axis direction is denoted as P, the arrangement pitch in the z-axis direction is P in the arrangement pattern example of Figure 7(c) whereas P·(√3)/2 in the arrangement pattern example of Figure 7(d), which corresponds to an isotropic arrangement pitch. With such an arrangement, the density of the deep grooves 5 is increased in the z-axis direction in additions to the x-axis direction in the substrate plane (xz-plane).

Figure 7(e) illustrates an example of arrangement pattern in which the deep grooves 5 are randomly arranged instead of being lined up regularly. This arrangement pattern example corresponds to an arrangement pattern in which arrangement positions of the deep grooves 5 in the light-shield groove group 210 are randomly shifted from positions having periodicity. With randomly arranging the deep grooves 5 in this way, it is possible to eliminate (or reduce) gaps between the deep grooves 5 that allow stray light to pass through in any directions at locations in the optical circuit 200 where stray light may potentially jump into.

This random arrangement pattern example is, in other words, a probabilistic arrangement pattern regarding the elimination or suppression of stray light. Since the arrangement pattern is probabilistic, as increasing the number of the deep grooves 5, it is possible to reduce the probability of remaining gaps that allow stray light to pass through. Therefore, in this arrangement pattern, for example, a size of an arrangement region for the deep grooves 5 may be expanded within a permissible range for the arrangement of the light-shield groove group 210 on the substrate plane (xz-plane) relative to the substrate size in order to maximize the number of deep grooves 5 to be arranged as much as possible.

Figure 7(f) corresponds to an example of arrangement pattern where, for example, in the arrangement pattern example of hexagonal packing depicted in Figure 7(d), the waveguide 3 passing through the light-shield groove group 210 is a waveguide containing a curved waveguide instead of a straight waveguide. In the arrangement pattern example of hexagonal packing depicted in Figure 7(d), as described above, with using an appropriate diameter D relative to the arrangement pitch P of the deep grooves 5 for the deep grooves 5, it is possible to eliminate (or reduce) gaps that allow stray light to pass through.

On the other hand, gaps that allow stray light to pass through are prone to remain in a vicinity of the waveguide 3. Therefore, with applying a waveguide that includes a curved waveguide to the waveguide 3 that passes through the light-shield groove group 210 as illustrated in the arrangement pattern depicted in Figure 7(f), it is also possible to eliminate (or reduce) gaps that allow stray light to pass through in the vicinity of the waveguide 3.

Figure 7(g) illustrates an example of arrangement pattern in which the waveguide 3 passing through the light-shield groove group 210 is a waveguide containing a curved waveguide in a similar way to the arrangement pattern example depicted in Figure 7(f). For example, the arrangement pattern example depicted in Figure 7(f) corresponds to an arrangement pattern where, in contrast to the deep grooves 5 arranged uniformly and regularly, any deep grooves 5 are not provided in a portion of the light-shield groove group 210 where the waveguide 3 passes through. A location where the deep groove 5 is not provided relative to the pattern of the waveguide 3 may be determined by, for example, a predetermined algorithm used when designing patterns.

In contrast, in the arrangement pattern example depicted in Figure 7(g), instead of providing the deep grooves 5 with the same basic shape (circular in Figure 7(f)) around the waveguide 3, the deep grooves 5 are provided with a shape formed by removing the pattern of the waveguide 3 from the basic shape. This arrangement pattern is determined by, for example, performing a pattern calculation based on a ridge pattern obtained by adding a predetermined width (in other words, a margin) to a width of the waveguide 3 relative to the deep grooves 5 in the portion where the waveguide 3 passes through the light-shield groove group 210. In the present example, since it is sufficient to perform pattern drawing calculation operations, an advantage of simplifying pattern design is achieved. The light-shield groove group 210-3 illustrated in Figure 3 corresponds to the arrangement pattern of the present example.

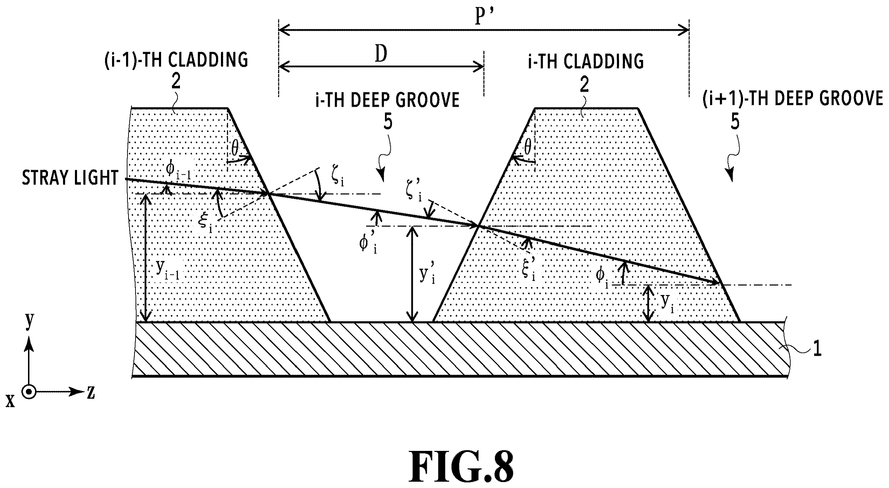

Figure 7(h) illustrates an arrangement pattern example in which a plurality of deep grooves 5 with a shape elongated in the x-axis direction (which may be referred to as "longitudinal stripes" for the sake of convenience) are arranged in the z-axis direction while keeping away from the waveguide 3. In Figure 7(h), a notation "D" denotes the width of the deep grooves 5 that are elongated in the x-axis direction and a notation "P‴" denotes a repetitive pitch of the deep grooves 5 in the z-axis direction, and these notations will be used in the description of propagation examples of stray light described later with reference to Figure 8.

In the arrangement pattern example illustrated in Figure 7(h), there are no gap (or the gap is minimized) that allow stray light to travel in a direction other than the direction of propagation along the x-axis direction to pass through. Therefore, it is possible to effectively attenuate stray light when it propagates in a direction generally along with the z-axis direction. In this arrangement pattern, since the cladding 2 remaining without being removed forms elongated ridge shapes, flexibility for example, along the direction of the x-axis is increased compared to the arrangement pattern examples illustrated in Figures 7(a) to 7(g).

[Amount of refraction by light-shield groove group]

Figure 8 is a diagram illustrating an example of details of propagation of stray light that propagates across a plurality of deep grooves 5 in the light-shield groove group 210 and corresponds to a diagram illustrating a partially enlarged section of the sectional view depicted in Figure 6. Hereinafter, how stray light propagating through the cladding 2 is refracted in the yz-plane by the deep groove 5 and travels toward the substrate 1 will be described with reference to Figure 8.

For the sake of simplicity, an arrangement pattern of the deep grooves 5 is assumed to be a uniform pattern in the x-axis direction such as the arrangement pattern depicted in Figure 7(h). In addition, a deviation angle from a 90° angle of a side wall of the deep groove 5 is denoted by $\theta$, a width of the pattern of the deep grooves 5 is denoted by D, and a repetitive pitch of the deep grooves 5 in the z-axis direction is denoted by P'. Here, while the values of D and P' are technically changed depending on a position in the y-axis direction when $\theta \neq 0°$, but for the sake of simplicity of calculation, they are assumed to be constant values, respectively, for descriptive purposes. In addition, stray light is assumed to travel toward a positive side in the z-axis direction within the yz-plane.

Let be assumed that stray light travels through an (i-1)-th cladding 2 (where i is an integer greater than or equal to 1) at an angle $\phi_{i-1}$ relative to the z-axis and a position in the y-axis direction on a boundary surface with an i-th deep groove 5 is $y_{i-1}$. A relationship between an incident angle $\xi_i$ (= $\phi_{i-1} + \theta$) and an emission angle $\zeta_i$ at a boundary surface between the cladding 2 and the deep groove 5 is represented by the following Formula 4, according to Snell's law.

$$n_{clad} \cdot \sin \xi_i = \sin \zeta_i \qquad (4)$$

In the formula, $n_{clad}$ represents a refractive index of the cladding 2 and a refractive index of the deep grooves 5 is a refractive index of air (= 1). Therefore, a travel angle $\phi'_i$ (= $\zeta_i - \theta$) of stray light at the i-th deep groove 5 is represented by the following Formula 5.

$$\phi'_i = \sin^{-1}\{n_{clad} \cdot \sin(\phi_{i-1} + \theta)\} - \theta \qquad (5)$$

In a similar way, a relationship between an incident angle $\xi'_i$ (= $\theta - \phi'_i$) and an emission angle $\zeta'_i$ at a boundary surface between the i-th deep groove 5 and the i-th cladding 2 is represented by the following Formula 6. Therefore, for a travel angle $\phi_i$ (= $\zeta_i - \theta$) of stray light in the i-th cladding 2, the following Formula 7 is derived based on the relationship represented by the following Formula 6, .

$$\sin \zeta'_i = n_{clad} \cdot \sin \xi'_i \qquad (6)$$

$$\phi_i = \theta - \sin^{-1}\left[\{\sin(\theta - \phi'_i)\}/n_{clad}\right] \qquad (7)$$

An amount of change "$y'_i - y_{i-1}$" of stray light in the y-direction in the i-th deep groove 5 is represented by "$-D \cdot \tan\phi_i$", and an amount of change "$y_i - y'_{i-1}$" in the i-th cladding 2 is represented by "$-(P'-D) \cdot \tan\phi_i$". Therefore, a position $y_i$ in the y-axis direction at a boundary surface between the i-th cladding 2 and an (i-1)-th deep groove 5 is representable by Formula 8 below.

$$y_i = y_{i-1} - D \cdot \tan \phi'_i - (P' - D) \cdot \tan \phi_i \qquad (8)$$

The position in the y-axis direction of stray light incident into the light-shield groove group 210, or in other words, an initial y-axis position $y_0$ corresponds to a height position of a center of the waveguide core 3 relative to the substrate 1 and, as a non-limiting example, the initial y-axis position $y_0$ is approximately 25 $\mu$m. In addition, an initial angle $\phi_0$ is, for example, zero. In the case of the silica-based waveguide 3, $n_{clad} \approx 1.445$.

It is possible to calculate the position $y_i$ of the stray light in the y-axis direction using these parameters and Formulas 5, 7, and 8. Therefore, when a minimum value of i for which the position $y_i$ of stray light in the y-axis direction becomes zero or less is denoted as $i_{min}$, it can be said that the light-shield groove group 210 enables the stray light to be removed from the cladding 2 when the length of the light-shield groove group 210 along the propagation direction of the stray light is set to longer than $i_{min} \cdot P'$.

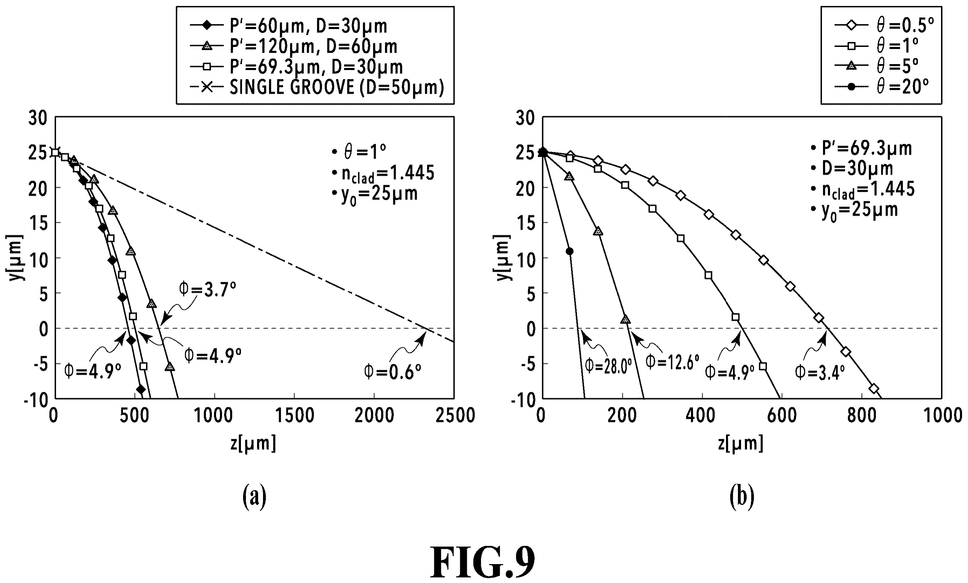

Figure 9 is a graph illustrating an example of a positional change in the y-axis direction of stray light propagating in the z-axis direction as the stray light travel through the light-shield groove group 210. Figure 9(a) illustrates a case where the width D and the repetitive pitch P' of the deep grooves 5 are set to three different combinations for $\theta = 1°$.

For example, in Figure 9(a), a diamond plot (♦) represents (P', D) = (60 $\mu$m, 30 $\mu$m), a triangle plot (▲) represents (P', D) = (120 $\mu$m, 60 $\mu$m), and a square plot (■) represents (P', D) = (69.3 $\mu$m, 30 $\mu$m), respectively.

As a comparative example, Figure 9(a) illustrates a case where, instead of the repetitive arrangement of the deep grooves 5 in the z-axis direction, the cladding 2 extends without being removed in the z-axis downstream direction beyond a position where a single deep groove is arranged, indicated by a cross-marked plot ($\times$). In the comparative example, the single deep groove has a width D in the x-axis direction of 50 $\mu$m.

In either case, as the stray light propagates in the z-axis direction, it is refracted toward the substrate 1. Here, a propagation distance in the z-axis direction where a position of stray light in the y-axis direction becomes $y_0 = 0$, in other words, the stray light reaches at the substrate 1 is approximately 2300 $\mu$m in the case of the single groove (cross-marked plot).

In contrast, in cases where the light-shield groove group 210 is provided (three kind of plots of: $\blacklozenge$ plot, $\blacktriangle$ plot, and $\blacksquare$ plot), the propagation distance in the z-axis direction where stray light reaches at the position $y_0 = 0$ in the y-axis direction is significantly reduced to approximately 450 to 650 $\mu$m from 2300 $\mu$m.

Furthermore, as can be understood from comparing the $\blacklozenge$ plot and $\blacktriangle$ plot, as the repetitive pitch P' and the width D are reduced to densely arrange the deep grooves 5, it is possible to shorten the propagation distance in the z-axis direction before stray light reaches at the substrate 1. In other words, it is possible to shorten a length in the z-axis direction of the region where the light-shield groove group 210 is arranged.

In this way, with arranging the light-shield groove group 210 in which a plurality of deep grooves 5 are repeated at least in a direction along the propagation direction of stray light in the optical circuit 200, it is possible to effectively expel the stray light to outside of the cladding 2 (for example, the substrate 1) to be attenuated. Furthermore, as the arrangement density of the deep grooves 5 is increased, it is possible to enhance the effect of attenuation of stray light.

Figure 9(a) also illustrates, for example, an angle $\phi$ relative to the z-axis when the stray light reaches at the substrate 1. It is understood that the shorter the propagation distance in the z-axis direction before the stray light reaches at the substrate 1, the larger the angle $\phi$ tends to be. Since the greater the angle $\phi$ relative to the z-axis when the stray light reaches at the substrate 1 from inside the cladding 2, the easier it is to suppress reflection at the boundary surface between the cladding 2 and the substrate 1, for example, it is possible to enhance efficiency of expelling the stray light from the cladding 2 to the substrate 1.

As an example, a case of the arrangement pattern example of hexagonal packing depicted in Figure 4 will be considered. The stray light that has crossed the first row of deep grooves 5 passes through the cladding 2 remaining between the second row of deep grooves 5 in the second row, and then crosses the deep groove 5 in the third row. Therefore, an effective repetitive pitch P' of the deep grooves 5 may be represented by the following Formula 9.

$$P' = \sqrt{3} \cdot P \cong 1.73 \cdot P \quad (9)$$

In the example described later, as a non-limiting example, P = 45 $\mu$m and D = 30 $\mu$m. In this case, P' = 69.3 $\mu$m. In Figure 9(a), the square plot ($\blacksquare$) corresponds to an example of a calculation result using this parameter. Generally, it is understood that stray light reaches the substrate 1 at a propagation distance of approximately 500 $\mu$m in the z-axis direction.

On the other hand, Figure 9(b) illustrates examples of calculated positional changes in the y-axis direction of stray light for four individual cases where the angle $\theta$ described above is changed to $\theta = 0.5°$, $\theta = 1°$, $\theta = 5°$, and $\theta = 20°$, with P' = 69.3 $\mu$m and D = 30 $\mu$m. Although the side wall of the deep grooves 5 is generally processed to an angle perpendicular ($\theta = 0°$) with respect to the substrate 1, it is possible to process the side wall to have an angle ($\theta \neq 0°$) inclined relative to the substrate 1 by adjusting processing conditions of a step such as photolithography or etching.

Here, the larger the inclination angle $\theta$ of the side wall of the deep groove 5 relative to the substrate 1, the shorter the propagation distance in the z-axis direction of the stray light until it reaches the substrate 1; however, even when $\theta = 0.5°$ which is the minimum angle among the four angles $\theta$ described above, the propagation distance in the z-axis direction is approximately 720 $\mu$m. Therefore, it is possible to significantly shorten the propagation distance of the stray light in the z-axis direction in comparison with the single groove depicted by the cross-shaped plot depicted in Figure 9(a).

Note that Figure 9(b) also illustrates an angle $\phi$ relative to the z-axis when the stray light reaches at the substrate 1 in a similar way to Figure 9(a). When the height (or thickness) of the cladding 2 in the y-axis direction is 40 $\mu$m, in order to achieve a configuration where the deep groove 5 is substantially dug until reaching the substrate 1, a maximum value of the inclination angle $\theta$ is approximately 20.6° when assuming D = 30 $\mu$m on the top surface of the cladding 2.

In the explanation so far, the distance that stray light travels before reaching the substrate 1 has been taken as a guideline for the length capable of removing stray light, in other words, for the length of a region where the light-shield groove group 210 is to be arranged. However, depending on the configuration of the optical circuit 200, it may not be an essential condition that the stray light reaches the substrate 1. Hereinafter, this point will be described.

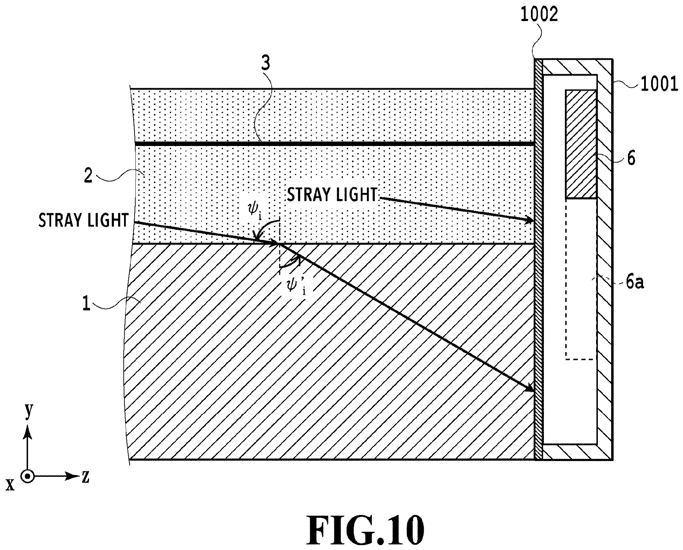

Figure 10 is a sectional view schematically illustrating an example of a light-reception element 6 mounted on an end face of an optical circuit (for example, the optical circuit 200). Illustratively, the light-reception element 6 is sealed in a space formed by a package 1001 and a package window 1002 and mounted on a chip end face of the optical circuit while being aligned to a position capable of receiving output light from the waveguide core 3.

When focusing on reducing crosstalk at the light-reception element 6, signal light propagating through the waveguide core 3 and emitted from the chip end face is received by the light-reception element 6 and stray light just have to be prevented from entering the light-reception surface of the light-reception element 6. Therefore, even if the stray light propagating in the cladding 2 does not reach the substrate 1, a y-position of the stray light just have to be lower than a position corresponding to a lower end of the light-reception surface of the light-reception element 6.

On the other hand, a case where a size of the light-reception surface of the light-reception element 6 may overlap with the end surface of the substrate 1 in the y-axis direction is also conceivable as illustrated by a light-reception element 6a with a dotted line in Figure 10. In this case, the y-position of stray light propagating in the substrate 1 may not fall below the position corresponding to the lower end of the light-reception surface of light-reception element 6a on the chip end face.

For example, when using a non-doped wafer called a high-resistance wafer as the substrate 1, absorption loss is not so large when light with a 1.55 $\mu$m wavelength band propagates through the substrate 1. Therefore, in such a case, parameters such as the size of the light-shield groove group 210 and the repetitive pitch may be determined so that the y-position of stray light propagating in the substrate 1 falls below the position corresponding to the lower end of the light-reception surface of light-reception element 6a on the chip end face.

As described above, when focusing on different specific travel directions of stray light, parameters such as the size of the light-shield groove group 210 and the repetitive pitch of the deep grooves 5 may be determined according to each condition. When the number of generation locations and the number of jumped-in locations of stray light increase in accordance with an increase in the circuit scale of the optical circuit 200, the parameters described above may be determined, for example, by approximately using the distance until stray light in a specific travel direction reaching the substrate 1 as a guideline for removing stray light. Thereby, it is possible to address even cases where many travel directions of stray light are to be considered for parameter determination, for example.

[Light-shield groove group using deep grooves of different sizes in part of or all of multiple regions]

In the optical circuit 200, an arrangement region of one light-shield groove group 210 may be segmented, for example, into a plurality of regions (which may be referred to as "segmented regions") and deep grooves 5 of different sizes may be applied in a part of or all of the segmented regions.

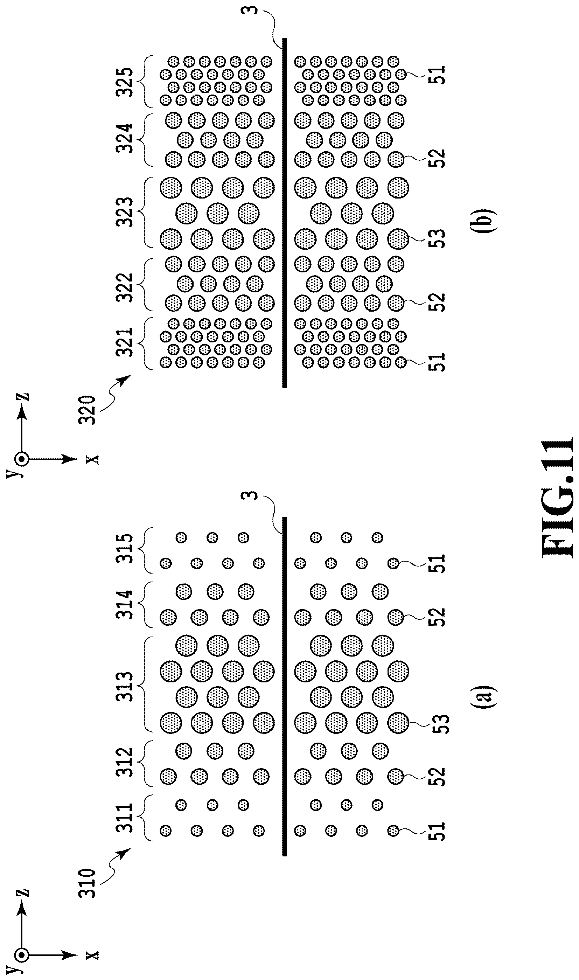

For example, Figure 11 is a diagram illustrating an example of an arrangement pattern corresponding to a configuration in which the diameter D of the deep grooves 5 is differentiated in a part of or all of a plurality of segmented regions in the arrangement pattern example of the deep grooves 5 depicted in Figure 7(d). Also, Figure 11 illustrates an arrangement pattern based on the hexagonal packing arrangement depicted in Figure 7(d).

For example, in an arrangement pattern 310 depicted in Figure 11(a), among a plurality of (for example, five) regions 311 to 315, the diameters D of a deep groove 53 and a deep groove 52 differ from one another between the region 313 and the regions 312 and 314. In addition, the diameters D of the deep groove 52 and the deep groove 51 differ from one another between the regions 312 and 314 and the regions 311 and 315. The diameters D of the deep grooves may be the same or may be different from one another between the region 312 and the region 314 and between the region 311 and the region 315.

Although the deep groove 53 in the region 313 may be understood to have the same configuration as the deep groove 5 depicted in Figure 7(d), the diameter D of the deep groove 53 corresponds to, for example, the diameter D of the maximum size capable of almost completely digging the cladding 2. The diameter D of the deep groove 52 in the regions 312 and 314 is smaller than, for example, the diameter D of the deep groove 53 in the region 313. In addition, the diameter of the deep groove 51 in the regions 311 and 315 is further smaller than, for example, the diameter of the deep groove 52 in the regions 312 and 314. In this way, the provision of a plurality of deep grooves 51 to 53 with different sizes is different from that in the arrangement pattern example of the light-shield groove group 210 depicted in Fig. 7.

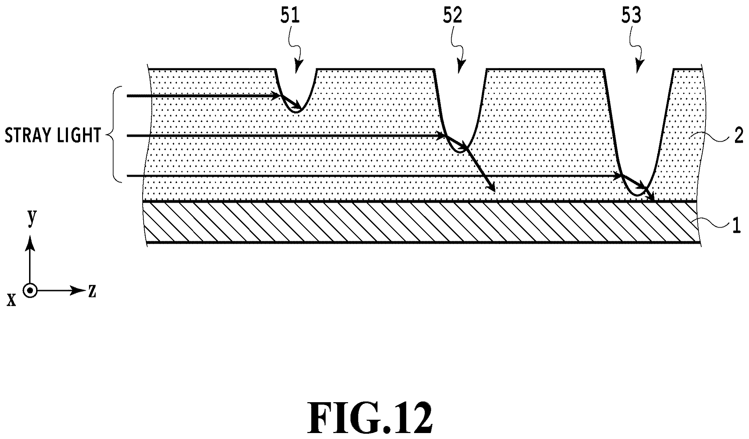

Here, when the size of the groove to be processed is smaller than a processing limit, it is difficult to dig the groove completely. In addition, near the processing limit, a shape of a portion corresponding to the bottom of the groove may be formed with a relatively rounded contour. Figure 12 is a sectional view schematically illustrating an example of a finished shape of grooves near the processing limit of the embodiment.

In Figure 12, the deep groove 53 is exemplified as a finished shape formed digging the cladding 2 to the very limit of the depth at which it almost reaches the top surface of the substrate 1. Meanwhile, the deep grooves 52 and 51 in Figure 12 are exemplified as finished shapes in which the cladding 2 is shallower than the deep groove 53 because it is difficult to dig the cladding 2 to the very limit of the depth at which it reaches the top surface of the substrate 1.

Furthermore, since the deep grooves 51 to 53 are all rounded near the bottom of the groove, the angle of the side wall of each deep groove relative to the substrate 1 tends to deviate from 90° (for example, a deviation angle $\theta$ tends to increase). Therefore, the stray light passing near the bottom of the groove is possible to be deflected toward the substrate 1 more than the stray light passing through other portions.

Accordingly, it is possible to expel the stray light propagating through the cladding 2 more effectively to the outside of the cladding 2. Furthermore, since the deep grooves 53, 52, and 51 have bottoms at different positions in the y-axis direction, they are possible to share in the deflection of a plurality of stray light beams with different y positions in a direction approaching the substrate 1.

The arrangement pattern 310 illustrated in Figure 11(a) is an "uniform pitch type" arrangement pattern example in which the deep grooves 51 to 53 of different sizes are distributed and arranged separately for different segmented regions 311 to 315 such that the repetitive pitch is uniform. However, such a clear distribution into distinct regions is not essential and, for example, the deep grooves 51 to 53 with different sizes may be arranged randomly. For example, in each of the segmented regions 311 to 315, sizes of the deep grooves 51 to 53 may be randomly selected, respectively.

Figure 11(b) is a diagram illustrating an example of an arrangement pattern 320 in which the diameter of deep grooves is changed individually for a plurality of regions and an arrangement pitch of the deep grooves is differentiated depending on their diameter. In Figure 11(b), the diameter D of each of the deep grooves 51 to 53 may be understood to be the same as the arrangement pattern 310 depicted in Figure 11(a).

However, for each of the region 323 arranged with the deep groove 53, the regions 322 and 324 arranged with the deep groove 52, and the regions 321 and 325 arranged with the deep groove 51, the ratio of the diameter (D) and the arrangement pitch (P) is constant. In other words, the arrangement pattern 320 depicted in Figure 11(b) is an example of an arrangement pattern of "uniform aperture ratio type." With using such arrangement pattern 320, it is possible to configure the light-shield groove group 210 that satisfies the conditions represented by the aforementioned Formula 3 for any of the regions 321 to 325.

As described above, the optical circuit 200 according to the embodiment has the light-shield groove group 210 configured by two-dimensionally arraying the plurality of deep grooves 5 formed by removing the cladding 2 around the waveguide core 3. The light-shield groove group 210 enables stray light propagating through the cladding 2 to be scattered and attenuated by refraction or reflection.

For example, since the travel direction of stray light is deflected in the y-axis direction by setting the angle of the side wall of the deep groove 5 relative to the substrate 1 to an angle other than 90° (in other words, setting the aforementioned angle $\theta$ to an angle other than 0°), it is possible to enhance a certainty that the stray light is scattered outside the cladding 2 and attenuated. Therefore, for example, compared to the case where the stray light is deflected within the circuit plane (in other words, in the xz-plane), the effect of reducing stray light in the optical circuit 200 is significantly enhanced because of the additional deflection of the stray light in the y-axis direction.

For example, according to the light-shield groove group 210 configured with two-dimensionally arraying the deep grooves 5 as illustrated in Figures 7(a) to 7(g) or Figure 11, since refraction or reflection occurs in the x-axis direction in addition to refraction in the y-axis direction, it is possible to further attenuate stray light propagating in the z-axis direction. Furthermore, when the groove structure is miniaturized, it is possible to increase the arrangement density of the walls of the cladding 2, and thus, the mechanical strength of the optical circuit 200 is also available to be relatively enhanced.

In addition, the denser the array of deep grooves, the more effectively the deep grooves is able to scatter light over shorter distances. Furthermore, with arranging the light-shield groove group 210 in a curved waveguide portion, it is possible to reliably attenuate the stray light propagating through the cladding 2 near the waveguide core 3.

Therefore, for example, even when the circuit scale and the integration density of the optical circuit 200 are increased, it is not necessary to examine in detail all of possible jumped paths of stray light, directions of the total reflection of stray light, and the like. For example, with designing the circuit according to a certain rule, such as providing the light-shield groove group 210 with a predetermined region size between the optical interferometer circuits 110 and 120, it is possible to effectively attenuate the stray light. Therefore, it is possible to reduce the difficulty of designing the optical circuit 200 and to eliminate or minimize constraints related to arrangement such as connection positions of interferometers and input/output optical fibers and light-reception element positions.

In the embodiment described above, for example, since there is not required to use filling by coating a light-absorbing material, it is possible to avoid cost increases or reliability concerns. However, a method of filling all of or a part of the deep grooves 5 configuring the light-shield groove group 210 with coating a light-absorbing material may be applied in the present disclosure. In this case, a material-based stray light attenuation effect is achieved by the light-absorbing material, in addition to the structural stray light attenuation effect provided by the deep grooves 5.

For example, a light-shield material may be filled in the light-shield groove group 210 configured by two-dimensionally arraying the deep grooves 5 as illustrated in Figures 7(a) to 7(g). In this case, for example, it is possible to enhance the mechanical strength of the optical circuit 200 in comparison with a configuration in which a cladding left intact without removal is limited to a periphery of the waveguide core 3, as described in Patent Literature 2.

[Supplemental notes on the embodiment]

In the optical circuit 200 illustrated in Figure 3 based on the configuration of Figure 1, circuits such as the optical interferometer circuits 110 and 120 and the optical branch circuit 130 do not need to be provided in two sets each; for example, a single set or three or more sets may be provided.

In addition, Although the optical circuit 200 depicted in Figure 3 represents an example in which the light-shield groove group 210 is arranged at three locations on the substrate 1 depending on the number of jumped-in locations of stray light, the number of light-shield groove groups 210 arranged in the optical circuit 200 may be one or two, or may be four or more.

Furthermore, while an example in which light that is an attenuation object by the light-shield groove group 210 is stray light has been explained in the embodiment described above, the light-shield groove group 210 may be used to attenuate light that differs from stray light.

[Example]

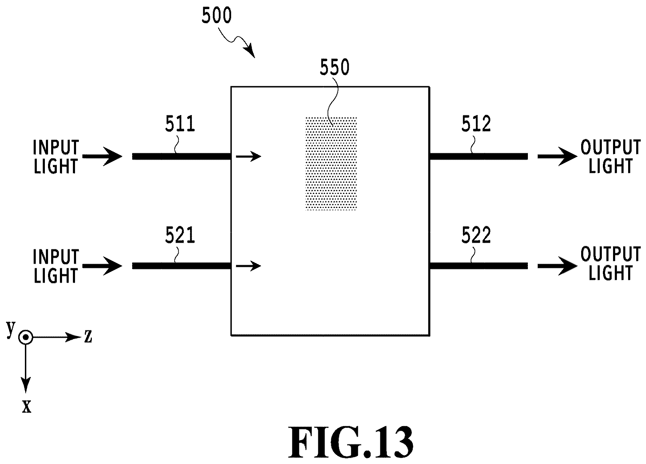

Figure 13 is a top view schematically illustrating an example of a test circuit 500 fabricated in order to verify an effect of a light-shield groove group according to an example. A silica-based cladding 2 is made on a silicon substrate. In addition, a light-shield groove group 550 is made above a central part of the cladding 2 in a plan view. In the test circuit 500, the waveguide (core) 3 is not made because the objective is to verify the reduction effect of stray light propagating through the cladding 2.

The arrangement pattern of the deep grooves configuring the light-shield groove group 550 is the hexagonal packing arrangement illustrated in Figure 4, and a shape of the deep grooves in a plan view is a circular shape. The diameter D of the deep grooves is 30 $\mu$m, for example. The arrangement pitch P of the deep grooves is 45 $\mu$m, for example. The height of the cladding 2 in the y-axis direction is approximately 40 $\mu$m, for example. The deviation angle ($\theta$) of an angle of the side wall of the deep grooves relative to the substrate 1 from 90° is approximately 1°. The length of a region in which the light-shield groove group 550 is provided in the z-axis direction is approximately 1 mm.

Input optical fibers 511 and 521 and output optical fibers 512 and 522 are connected to chip end face of the test circuit 500 at positions with heights approximately 25 $\mu$m above the substrate 1 (in the y-axis direction). The input optical fiber 511 and the output optical fiber 512 are connected at, for example, positions (x-positions in the x-axis direction) where their end faces are faced in each other, and the light-shield groove group 550 is arranged between the input optical fiber 511 and the output optical fiber 512.

Meanwhile, the input optical fiber 521 and the output optical fiber 522 are connected so that their end faces are faced in each other at x-positions different from the connected positions (x-positions) of the input optical fiber 511 and the output optical fiber 512. Unlike between the input optical fiber 511 and the output optical fiber 512, the light-shield groove group 550 is not arranged on the cladding 2 between the input optical fiber 521 and the output optical fiber 522.

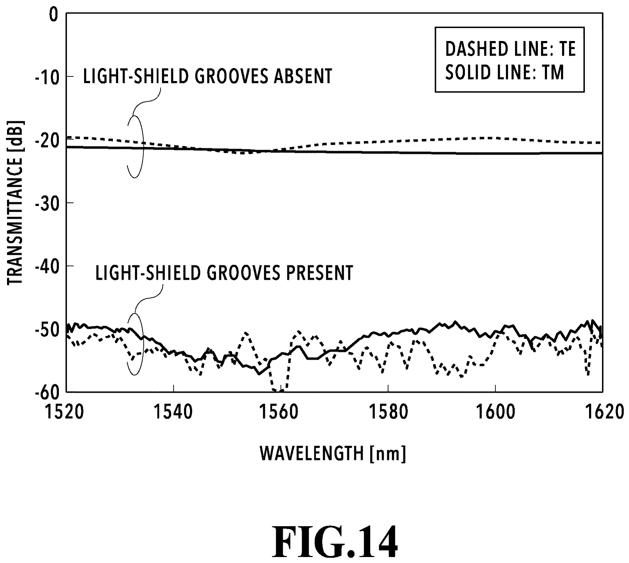

Figure 14 is a graph illustrating an example of a result of evaluating a transmittance spectrum of the test circuit 500 with respect to a wavelength according to the example. As illustrated in Figure 14, it can be understood that an average light transmittance in the optical path where the light-shield groove group 550 is arranged is lower than an average light transmittance in the optical path where the light-shield groove group 550 is not arranged, regardless of the polarization mode of light (TE mode or TM mode).

For example, when the average light transmittance of the optical path from the input optical fiber 511 through the light-shield groove group 550 to the output optical fiber 512 using a 1.55 $\mu$m wavelength light source was evaluated, it was approximately -53 dB. On the other hand, the average light transmittance of the optical path from the input optical fiber 521 to the output optical fiber 522 without involving the light-shield groove group 550 was approximately -21 dB. Therefore, it was verified that the light-shield groove group 550 enables stray light to be reduced by approximately 32 dB.

While the present disclosure has been described in detail, it will be obvious to those skilled in the art that the spirit and scope of the present disclosure are not limited to the content described herein. The present disclosure may be implemented in modified and altered modes without departing from the spirit and scope of the present disclosure as defined by the appended claims. Therefore, the description herein is provided for illustrative purposes only and shall not be construed as limiting the spirit and scope of the present disclosure.

[Industrial Applicability]

The present disclosure is useful, for example, in optical communication technology.

Reference Signs List

1 substrate
2 cladding layer
3 waveguide (core)
4 thin-film heater
5, 51 to 53 deep groove
6, 6a light-reception element

100, 200 optical circuit
101a, 101b, 511, 521 input optical fiber
102a, 102b, 512, 522 output optical fiber
103a, 103b light-reception element
110a, 110b, 120a, 120b optical interferometer circuit
111a, 111b, 112a, 112b, 121a, 121b, 122a, 122b unconnected port
130a, 130b optical branch circuit
210-1, 210-2, 210-3, 550 light-shield groove group
311 to 315, 321 to 325 region
500 test circuit
1001 package
1002 package window

**Claims**

1. A planar lightwave circuit, comprising:

   a substrate;
   a cladding layer provided on the substrate;
   a core embedded in the cladding layer to form a waveguide; and
   a depressed region in which a plurality of depressed portions formed in the cladding layer are arranged two-dimensionally in an in-plane direction of the cladding layer.

2. The planar lightwave circuit according to claim 1, wherein the depressed portions are air layers.

3. The planar lightwave circuit according to claim 2, wherein an angle formed by a normal of a side wall surface of the depressed portions and a normal of a substrate surface of the substrate is different from 90°.

4. The planar lightwave circuit according to claim 3, wherein a normal direction of the side wall surface of the depressed portions is a direction oriented from an interior to an exterior of the cladding layer, a normal direction of the substrate surface of the substrate is a direction oriented from the substrate toward the cladding layer, and an angle formed by the normal direction of the side wall surface and the normal direction of the substrate surface is less than 90°.

5. The planar lightwave circuit according to claim 1, wherein a shape of the depressed portions in a plan view is a circular shape.

6. The planar lightwave circuit according to claim 1 or 2, wherein an arrangement of the plurality of depressed portions in the depressed region is a hexagonal packing arrangement.

7. The planar lightwave circuit according to claim 2, wherein a shape of the depressed portions in a plan view is a circular shape, an arrangement of the plurality of depressed portions in the depressed region is a hexagonal packing arrangement, and when a diameter of the circular shape is represented by D and an arrangement pitch of the depressed portions is represented by P, the diameter D and the arrangement pitch P satisfy Formula 1 below.

$$0.5{\cdot}P \leq D < P \qquad (1)$$

8. The planar lightwave circuit according to claim 7, wherein the diameter D and the arrangement pitch P satisfy Formula 2 below.

$$\frac{\sqrt{3}}{2}{\cdot}P \leq D < P \quad (2)$$

9. The planar lightwave circuit according to claim 2, wherein a normal direction of a side wall surface of the depressed portions is a direction oriented from an interior to an exterior of the cladding layer, a normal direction of a substrate surface of the substrate is a direction oriented from the substrate toward the cladding layer, and an angle formed by the normal direction of the side wall surface and the normal direction of the substrate surface is less than 90°,

a shape of the depressed portions is a circular shape in a plan view and an arrangement of the depressed portions in the depressed region is a hexagonal packing arrangement,

the angle formed by the normal direction of the side wall surface and the normal direction of the substrate surface is represented using a deviation angle $\theta$ ($\neq 0°$) from the angle as 90° - $\theta$,

a position of a central axis of the core relative to the substrate is represented by an initial position $y_0$, a refractive index of the cladding layer is represented by $n_{clad}$, a diameter of the circular shape is represented by D, an arrangement pitch of the depressed portions is represented by P, and a repetitive pitch of the depressed portions is represented by P' = ($\sqrt{3}$)·P, respectively, and

when an initial angle of a travel angle of stray light relative to the substrate surface in an i-th cladding layer (where i is an integer greater than or equal to 1) in the depressed region is represented by $\phi_0 = 0°$ and a position of the stray light relative to the substrate is represented by $y_i$, a length of the depressed region in a direction along a propagation direction of the stray light is longer than $i_{min}$·P', where $i_{min}$ denotes a minimum i for which the position $y_i$ derived from Formulas 3 to 5 below is zero or less.

$$\phi'_i = \sin^{-1}\{n_{clad} \cdot \sin(\phi_{i-1} + \theta)\} - \theta \qquad (3)$$

$$\phi_i = \theta - \sin^{-1}\left[\{\sin(\theta - \phi'_i)\}/n_{clad}\right] \qquad (4)$$

$$y_i = y_{i-1} - D \cdot \tan\phi'_i - (P' - D) \cdot \tan\phi_i \qquad (5)$$

10. The planar lightwave circuit according to claim 2, wherein a part of or all of the plurality of depressed portions that configure the depressed region have different sizes in either or both of a plan view and a sectional view relative to the substrate.

11. The planar lightwave circuit according to claim 10, wherein the depressed region is segmented into a plurality of regions, the sizes of the depressed portions differ and an arrangement pitch of the depressed portions differ in a part or all of the plurality of segmented regions.

**FIG.1**

EP 4 737 961 A1

FIG.2

**FIG.3**

EP 4 737 961 A1

**FIG.4**

<u>210</u>

FIG.5

FIG.6

FIG.7

**FIG.8**

EP 4 737 961 A1

(a)                                                    (b)

**FIG.9**

EP 4 737 961 A1

**FIG.10**

**FIG.11**

EP 4 737 961 A1

EP 4 737 961 A1

**FIG.12**

500

550

INPUT
LIGHT →      511 →

512 →      OUTPUT
LIGHT

INPUT
LIGHT →      521 →

522 →      OUTPUT
LIGHT

y ⊙ → z

x

# FIG.13

FIG.14

## INTERNATIONAL SEARCH REPORT

| International application No. |
| --- |
| **PCT/JP2024/027191** |

| A. | CLASSIFICATION OF SUBJECT MATTER |
| --- | --- |

*G02B 6/122*(2006.01)i; *G02B 6/125*(2006.01)i
FI:   G02B6/122; G02B6/125

According to International Patent Classification (IPC) or to both national classification and IPC

| B. | FIELDS SEARCHED |
| --- | --- |

Minimum documentation searched (classification system followed by classification symbols)

G02B6/12-6/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2006/025523 A1 (NEC CORPORATION) 09 March 2006 (2006-03-09) paragraphs [0015]-[0017], fig. 4-6 | 1, 5-6 |
| A | | 2-4, 7-10 |
| X | WO 2019/111401 A1 (MITSUBISHI ELECTRIC CORPORATION) 13 June 2019 (2019-06-13) paragraphs [0009]-[0028], fig. 1-5 | 1-2 |
| A | | 3-11 |
| X | WO 2022/070659 A1 (TDK CORPORATION) 07 April 2022 (2022-04-07) paragraphs [0054]-[0063], [0072], [0074], fig. 8-10 | 1-4, 10-11 |
| A | | 5-9 |
| A | WO 2017/077638 A1 (OLYMPUS CORPORATION) 11 May 2017 (2017-05-11) entire text, all drawings | 1-11 |

☑ Further documents are listed in the continuation of Box C.   ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **03 October 2024** | **15 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/027191**

### C.    DOCUMENTS CONSIDERED TO BE RELEVANT

| Category* | Citation of document, with indication, where appropriate, of the relevant passages | Relevant to claim No. |
|---|---|---|
| A | JP 2022-505829 A (KVH Industries, Inc.) 14 January 2022 (2022-01-14)<br>entire text, all drawings | 1-11 |
| A | JP 2002-350657 A (NIPPON TELEGRAPH AND TELEPHONE CORPORATION) 04 December 2002 (2002-12-04)<br>entire text, all drawings | 1-11 |
| A | WO 2005/078512 A1 (THE FURUKAWA ELECTRIC CO., LTD.) 25 August 2005 (2005-08-25)<br>entire text, all drawings | 1-11 |
| A | EP 1396741 A1 (AVANEX CORPORATION) 10 March 2004 (2004-03-10)<br>entire text, all drawings | 1-11 |

Form PCT/ISA/210 (second sheet) (July 2022)

## INTERNATIONAL SEARCH REPORT
### Information on patent family members

International application No.

**PCT/JP2024/027191**

| Patent document cited in search report | | | Publication date (day/month/year) | Patent family member(s) | | | Publication date (day/month/year) |
|---|---|---|---|---|---|---|---|
| WO | 2006/025523 | A1 | 09 March 2006 | US | 2007/0263957 | A1 | |
| | | | | paragraphs [0063]-[0068], fig. 4-6 | | | |
| | | | | CN | 101010609 | A | |
| WO | 2019/111401 | A1 | 13 June 2019 | (Family: none) | | | |
| WO | 2022/070659 | A1 | 07 April 2022 | US | 2023/0228941 | A1 | |
| | | | | paragraphs [0073]-[0086], [0094], [0096], fig. 8-10 | | | |
| | | | | CN | 115605790 | A | |
| | | | | JP | 2023-165049 | A | |
| WO | 2017/077638 | A1 | 11 May 2017 | (Family: none) | | | |
| JP | 2022-505829 | A | 14 January 2022 | US | 2020/0135960 | A1 | |
| | | | | entire text, all drawings | | | |
| | | | | WO | 2020/092789 | A1 | |
| | | | | KR | 10-2021-0083281 | A | |
| | | | | CA | 3115836 | A1 | |
| JP | 2002-350657 | A | 04 December 2002 | US | 2002/0118941 | A1 | |
| | | | | entire text, all drawings | | | |
| | | | | EP | 1219984 | A2 | |
| WO | 2005/078512 | A1 | 25 August 2005 | US | 2007/0013991 | A1 | |
| | | | | entire text, all drawings | | | |
| | | | | EP | 1722265 | A1 | |
| EP | 1396741 | A1 | 10 March 2004 | WO | 2004/023179 | A1 | |
| | | | | AU | 2003265051 | A1 | |

Form PCT/ISA/210 (patent family annex) (July 2022)

**REFERENCES CITED IN THE DESCRIPTION**

**Patent documents cited in the description**

- JP 2010032921 A
- JP H95548 A